Europäisches Patentamt

European Patent Office

Office européen des brevets

(19)

(11) Numéro de publication: **0 240 396**

**B1**

(12) **FASCICULE DE BREVET EUROPEEN**

(45) Date de publication du fascicule du brevet: **08.08.90**

(51) Int. Cl.⁵: **G 01 B 11/10**

(21) Numéro de dépôt: **87400574.7**

(22) Date de dépôt: **13.03.87**

(54) **Procédé et dispositif de mesure au défilé du diamètre d'un objet longiligne tel qu'une fibre optique.**

(30) Priorité: **14.03.86 FR 8603700**

(43) Date de publication de la demande:
**07.10.87 Bulletin 87/41**

(45) Mention de la délivrance du brevet:
**08.08.90 Bulletin 90/32**

(84) Etats contractants désignés:
**AT BE CH DE ES FR GB GR IT LI LU NL SE**

(56) Documents cités:
**EP-A-0 157 431**
**DE-A-2 847 552**
**FR-A-2 483 070**
**GB-A-2 159 621**

IBM TECHNICAL DISCLOSURE BULLETIN, vol.
25, no. 5, octobre 1982, pages 2349-2350, New
York, US; H. BAIER et al.: "Line width
measurement in grey level digitized patterns"

(73) Titulaire: **BERTIN & CIE**
**Zone Industrielle Boîte postale 3**
**F-78373 Plaisir Cédex (FR)**

(72) Inventeur: **Millet, Jocelyn**
**20 Rue des Bougainvillées**
**F-84120 Pertuis (FR)**
Inventeur: **Debrie, Jean**
**La Reynarde "B" 28 Avenue Colonel Schuler**
**F-13090 Aix-en-Provence (FR)**

(74) Mandataire: **Ramey, Daniel**
**Cabinet Ores 6 Avenue de Messine**
**F-75008 Paris (FR)**

Courier Press, Leamington Spa, England.

## Description

L'invention concerne un procédé et un dispositif de mesure au défilé du diamètre d'un objet longiligne, tel qu'une fibre optique par exemple.

Le diamètre des fibres optiques doit être contrôlé avec précision lors de leur processus de fabrication, et la mesure du diamètre doit être réalisée au défilé et sans contact avec a fibre.

Il est déjà connu, par le brevet français n° 2 483 070 d'effectuer la mesure de la largeur du diamètre d'un objet en défilement, tel qu'une bande, une tige ou un tube en cours de fabrication. La mesure est effectuée au moyen de deux caméras video ayant des axes optiques qui sont sensiblement coplanaires et perpendiculaires l'un à l'autre et qui sont orientées de façon à couper perpendiculairement l'axe de défilement de l'objet. Chaque caméra video est associée à deux rangées de photodétecteurs disposées symétriquement de chaque côté de l'axe optique de la caméra et à des moyens de balayage de chacune des ces rangées de photodétecteurs pour les balayer depuis l'extrémité de la rangée éloignée de l'axe optique vers l'extrémité voisine de cet axe optique, ce qui permet de déterminer la position sur chaque rangée de l'image d'un bord de l'objet et de déterminer ainsi le diamètre apparent et la position de l'objet.

Au cours du défilement de l'objet, sa position peut varier, par suite de vibrations, par rapport à l'axe théorique de défilement. Ce brevet antérieur prévoit de mesurer, au moyen d'une caméra video, le déplacement de l'objet le long de l'axe optique de l'autre caméra video, et d'utiliser cette mesure de déplacement pour calculer la correction appropriée de mesure de diamètre apparent effectuée par cette autre caméra video.

Un tel dispositif ne permet toutefois pas de mesurer avec une précision suffisante le diamètre d'un objet très fin tel qu'une fibre optique, dont le déplacement par rapport à l'axe théorique de défilement peut être du même ordre de grandeur que son diamètre. La recherche d'une précision suffisante oblige à utiliser, sur chaque voie de mesure, une seule barrette et une optique de grandissement d'image, dont la profondeur de mise au point est réduite, de telle sorte que le déplacement de la fibre optique par rapport à son axe théorique de défilement se traduit par la formation d'une image floue sur les rangées de photodétecteurs, qui interdit de déterminer le diamètre de la fibre optique et sa position par rapport à l'axe théorique de défilement.

Le document EP—A—0157 431 décrit un procédé de traitement d'une telle image floue, qui consiste à transformer le signal analogique fourni par des photodétecteurs en un signal logique, par comparaison du signal logique à un seuil correspondant à la moyenne des valeurs minimale et maximale des signaux des photodétecteurs. On peut alors déterminer la position du bord d'un objet, avec une précision qui est de l'ordre de la longueur d'un photodétecteur.

Le document IBM Technical Disclosure Bulletin, volume 25, n° 5, d'octobre 1982, page 2349 et 2350, décrit un procédé de traitement des niveaux de gris fournis par des photodétecteurs élémentaires, qui permet par exemple de déterminer la position exacte du bord d'un objet avec une précision meilleure que la longueur d'un photodétecteur élémentaire. Ce procédé consiste à numériser les signaux des photodétecteurs, puis à les intégrer pour obtenir une surface, à déterminer un rectangle ayant une surface égale à celle correspondant à l'intégration des signaux précités, et à considérer que les bords de ce rectangle sont situés sur les positions des bords de l'objet. L'inconvénient essentiel de ce procédé est qu' il faut traiter la totalité ou la plus grande partie des signaux des photodétecteurs, ce qui est très long lorsque le nombre de photodétecteurs est important.

L'invention a pour but d'éviter ces inconvénients et de permettre de mesurer au défilé le diamètre d'un objet longiligne, tel qu'une fibre optique par exemple, avec une précision bien supérieure à ce que l'on pouvait obtenir dans la technique antérieure.

L'invention propose donc, à cet effet, un procédé de mesure au défilé du diamètre d' un élément longiligne, tel qu'une fibre optique, au moyen de deux systèmes opto-électroniques fixes, dont les axes optiques sont sensiblement coplanaires et perpendiculaires l'un et l'autre et coupent perpendiculairement l'axe théorique de défilement de l'objet, ce procédé consistant à mesurer au moyen d'un de ces systèmes le déplacement de l'objet par rapport à son axe théorique de défilement parallèlement à l'axe optique de l'autre système, et à utiliser cette mesure pour corriger la mesure de diamètre effectuée par cet autre système, caractérisé en ce qu'il consiste à utiliser dans chaque système une optique de grandissement telle qu'une optique de microscope pour former une image agrandie floue de l'objet sur une barrette de photodétecteurs élémentaires, à repérer les photodétecteurs sur lesquels est formée une image floue d'un bord de l'objet et à enregistrer les signaux de ces photodétecteurs pour déterminer par calcul par interpolation la position exacte de chaque bord de l'objet, le calcul par interpolation précité consistant, pour chaque bord de l'objet, à comparer les signaux des photodétecteurs à un seuil prédéterminé, à identifier l'adresse d'un photodétecteur central situé sensiblement à mi-hauteur de l'image floue du bord de l'objet et à réaliser une interpolation linéaire sur les signaux d' un nombre prédéterminé de photodétecteurs situés de part et d'autre du photodétecteur central précité.

Le procédé suivant l'invention permet donc de tirer parti du flou de l'image agrandie formée sur une barrette de photodétecteurs pour déterminer la position exacte de chaque bord de l'image de l'objet avec une, précision supérieure à celle que l'on obtiendrait avec une image nette de l'objet sur la barrette de photodétecteurs.

L'invention présente donc, par rapport à la technique antérieure, le double avantage de permettre une mesure très précise du diamètre d'un objet très fin en défilement, et d'augmenter, par exemple d'un facteur 10, la précision de cette mesure.

Selon une autre caractéristique de l'invention, la mise au point de l'optique de grandissement de chaque système est réalisée en dehors de la zone de déplacement de l'axe de l'objet, pour former systématiquement une image floue de l'objet sur les barrettes de photodétecteurs, quelle que soit la position de l'objet par rapport à son axe théorique de défilement.

On est ainsi assuré d'obtenir une grande précision de mesure quelle que soit la position de l'axe de l'objet, et cela même si cet axe coïncide avec l'axe théorique de défilement.

Selon une autre caractéristique de l'invention, les mesures sont réalisées de façon synchrone par les deux systèmes opto-électroniques.

On peut ainsi s'affranchir des mouvements de l'objet pendant les mesures.

L'invention propose également un dispositif de mesure au défilé du diamètre d'un objet longiligne tel qu'une fibre optique, comprenant deux systèmes opto-électroniques fixes de mesure dont les axes optiques sont sensiblement coplanaires et perpendiculaires l'un à l'autre et coupent perpendiculairement l'axe théorique de défilement de l'objet, caractérisé en ce que chaque système comprend un objectif de grandissement tel qu'un objectif de microscope formant une image floue de l'objet sur une barrette de photodétecteurs élémentaires, des moyens pour repérer les photodétecteurs sur lesquels se forme une image floue d'un bord de l'objet, et des moyens de calcul par interpolation de la position exacte de ce bord et de calcul du diamètre apparent de l'objet et de sa position le long de l'axe optique de l'autre système, ces moyens comprenant un comparateur connecté aux photodétecteurs pour comparer les signaux des photodétecteurs à un seuil prédéterminé et pour déterminer, pour chaque bord de l'objet, l'adresse d'un photodétecteur central situé sensiblement à mi-hauteur de l'image floue du bord de l'objet, et des moyens de calcul effectuant une interpolation linéaire sur les signaux de sortie d'un nombre prédéterminé de photodétecteurs situés de part et d'autre du photodétecteur central.

L'invention sera mieux comprise et d'autres caractéristiques, détails et avantages de celle-ci apparaîtront au cours de la description explicative qui va suivre, faite en référence aux dessins annexés dans lesquels:

la figure 1 représente schématiquement un dispositif de mesure de diamètre de fibre optique selon l'invention;

la figure 2 représente schématiquement la détection des bords de l'image d'une fibre optique lorsque cette image formée sur une barratte de photodétecteurs est nette;

la figure 3 représente schématiquement la détection de la position d'un bord d'une image floue formée sur une barrette de photodétecteurs;

la figure 4 représente schématiquement la mise eu point des optiques de microscope par rapport à la zone de déplacement de l'axe de la fibre optique;

la figure 5 représente schématiquement les moyens de treitement des signaux fournis par les barrettes de photodétecteurs.

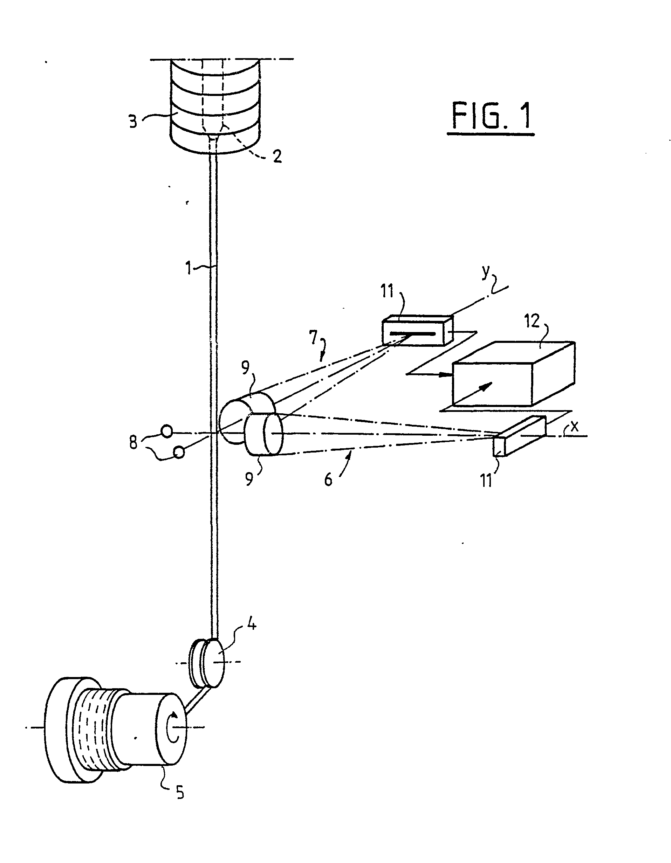

On se réfère d'abord à la figure 1, dans laqueile on a représenté schématiquement un dispositif selon l'invention de mesure du diamètre d'une fibre optique au cours de son processus de fabrication.

La fibre optique 1 sort d'une préforme 2 chauffée dans un four muni d'un serpentin 3. La fibre 1 passe ensuite sur un galet 4 ou dans une gorge fixe avant de s'enrouler sur un cabestan 5 entraîné en rotation. L'axe de défilement de la fibre optique est par exemple vertical. Cette installation de fabrication d'une fibre optique ne fait pas partie de l'invention et ne sera donc pas décrite plus en détail.

Le dispositif de mesure de diamètre selon l'invention comprend deux systèmes ou ensembles opto-électroniques 6 et 7 fixes, dont les axes optiques x et y sont sensiblement coplanaires et perpendiculaires, en étant orientés perpendiculairement à l'axe de défilement de la fibre optique.

Chaque système 6, 7 comprend une diode électroluminescente 8 éclairant la fibre, de l'autre côté de laquelle est disposé un objectif de grandissement 9, tel qu'un objectif de microscope formant i'image aggrandie de la fibre sur une barrette 11 de photodétecteurs élémentaires, qui sont par exemple des photodiodes du type C C D à transfert de charge. Les deux barrettes 11 sont reliées à un ensemble de traitement de données désigné par le référence 12 et permettant de calculer le diamètre de la fibre optique à partir des mesures effectuées.

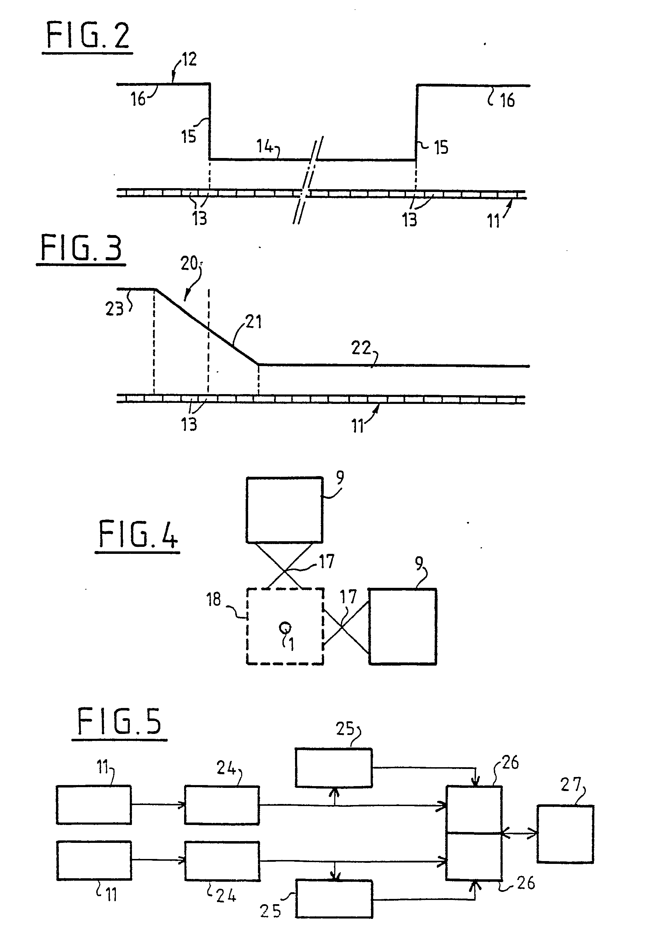

Lorsque les objectifs de microscope 9 sont mis au point sur l'axe théorique de défilement de le fibre optique, et si l'axe de la fibre optique coïncide avec son axe théorique de défilement, l'image formée par chaque objectif 9 sur la barrette 11 correspondante est nette. La figure 2 illustre schématiquement la façon dont est alors détectée la position de chaque bord de l'image de la fibre.

Dans cette figure, la courbe 12 représente schématiquement le niveau d'éclairement des photodétecteurs élémentaires ou pixels 13 d'une barrette II. Cette courbe 12 est en forme de créneau et comprend une partie 14 correspondant à la dimension transversale de l'image de la fibre optique, deux parties verticales 15 correspondant aux bords de cette image, et deux parties horizontales 16 à un niveau différent de celui de la partie médiane 14, qui correspondent à l'extérieur de l'image de la fibre optique. On comprend que, dans ces conditions, la détection de chacun des bords de l'image de la fibre optique ne peut intéresser qu'un seul pixel, ce qui détermine la précision de la mesure. La position de chaque bord de l'image de la fibre optique étant déterminée à plus ou moins I/2 pixel, le diamètre apparent de la fibre optique est déterminé à plus ou moins un pixel.

Toutefois, comme la position de l'axe de la fibre optique varie de façon importante par rapport à l'axe théorique de défilement, ce déplacement est en pratique supérieur à la profondeur de mise au point de chaque objectif de microscope, de sorte que les images formées sur les barrettes de photodétecteurs sont floues.

L'invention tire parti de ce flou pour améliorer la précision de la mesure.

Selon l'invention, le point de focalisation 17 de chaque objectif 9 se trouve entre l'objectif 9 et la zone 18 dans laquelle est susceptible de se déplacer la fibre optique 1 au cours de son défilement, de sorte que l'image de la fibre formée par chaque objectif 9 sur la barrette 11 correspondante est toujours floue.

Dans ces conditions, la courbe 20 du niveau d'éclairement des pixels 13 d'une barrette 11 a l'allure représentée en figure 3 et comprend une partie oblique 21 reliant deux parties sensiblement planes 22 et 23 correspondant respectivement à l'intérieur et à l'extérieur de l'image de la fibre optique.

Cette partie oblique 21, qui correspond à l'image aggrandie floue d'un bord de la fibre optique, intéresse un nombre relativement important de pixels 13. Cette partie 21 de la courbe est linéaire, au moins en dehors de ses extrémités de raccordement aux parties horizontales 22 et 23. Elle permet donc, en prenant en compte les signaux des pixels 13 intéressés, de déterminer par interpolation linéaire la position exacte de l'image du bord de la fibre optique avec une précision qui est plus ou moins $1/n$ pixels, $n$ étant le nombre de pixels concernés, par exemple égal à 20, ce qui permet d'améliorer d'un facteur 10 la précision de la mesure.

En pratique, cette interpolation est réalisée de la façon suivante, décrite en référence à la figure 5. Chaque barrette 11 de photodiodes à transfert de charge est associée, de façon classique, à des registres à décalage dans lesquels sont enregistrés les signaux de sortie des pixels de la barrette II. Des moyens de lecture séquentielle de ces registres fournissent un signal video qui est appliqué à l'entrée d'un convertisseur analogiquenumérique 24 dont la sortie est reliée, d'une part, à un comparateur 25 et, d'autre part, à une mémoire 26 de stockage des données. Un microprocesseur 27 est relié aux mémoires 26 pour effectuer les calculs nécessaires.

Dans chaque comparateur est enregistrée une valeur seuil qui a été prédéterminée par étalonnage et qui permet de repérer l'adresse du pixel dont le signal de sortie est le plus proche de celui correspondant à une position théorique de l'image d'un bord de la fibre optique. Le comparateur 25 permet donc de déterminer les adresses des deux pixels qui sont théoriquement les plus proches des deux bords de l'image de la fibre optique. Le microprocesseur 27 effectue ensuite le calcul d'interpolation linéaire uniquement sur les signaux de sortie des $n$ pixels qui sont situés de part et d'autre de chaque pixel central repéré par le comparateur 25. Lorsque $n$ est égal à 20 et que chaque barrette de photodétecteurs comprend environ 2 000 pixels, c'est-à-dire environ 1 000 pixels susceptibles d'être intéressés par un bord de fibre, on divise par 50 le temps nécessaire à la détermination de la position de la fibre optique. La précision de la mesure sur le diamètre de la fibre optique est alors de plus ou moins 0,1 µm pour une amplitude de débattement de la fibre optique de plus ou moins un millimètre par rapport à son axe théorique de défilement, le diamètre d'une fibre optique étant en général compris entre 50 et 500 µm environ.

Lorsque le diamètre apparent de la fibre optique et sa position ont été déterminés, des tables ou des fonctions de correction enregistrées en mémoire permettent de corriger les mesures de diamètre apparent réalisées par chaque système. Ces tables ou fonctions de correction ne sont pas communes aux deux systèmes, mais sont propres à chaque système, afin de tenir compte des caractéristiques optiques de chacun de ces systèmes et des dispersions de réalisation. Les mesures sont réalisées par les deux systèmes de façon synchrone, ce qui permet de s'affranchir des déplacements de le fibre optique et de ses vibrations, ces dernières pouvant être de l'ordre de 100 à 200 µm avec des fréquences relativement élevées.

**Revendications**

1. Procédé de mesure au défilé du diamètre d'un objet longiligne tel qu'une fibre optique, au moyen de deux systèmes opto-électroniques (6, 7) fixes de mesure, dont les axes optiques (x, y) sont sensiblement coplanaires et perpendiculaires l'un à l'autre et coupent perpendiculairement l'axe théorique de défilement de l'objet (1), le procédé consistant à mesurer au moyen d'un de ces systèmes le déplacement de l'objet par rapport à son axe théorique de défilement parallèlement à l'axe optique de l'autre système, et à utiliser cette mesure pour corriger la mesure de diamètre effectuée par cet autre système, caractérisé en ce qu'il consiste à utiliser dans chaque système (6, 7) une optique (9) de grandissement telle qu'une optique de microscope pour former une image agrandie floue de l'objet (1) sur une barrette (11) de photodétecteurs élémentaires, à repérer les photodétecteurs sur lesquels est formée une image floue d'un bord de l'objet et à enregistrer les signaux de ces photodétecteurs pour déterminer par calcul par interpolation la position exacte de chaque bord de l'objet, le calcul par interpolation précité consistant, pour chaque bord de l'objet, à comparer les signaux des photodétecteurs à un seuil prédéterminé, à identifier l'adresse d'un photodétecteur central situé sensiblement à mi-hauteur de l'image floue du bord de l'objet, et à effectuer une interpolation linéaire sur les signaux d'un nombre prédéterminé de photodétecteurs situés de part et d'autre du photodétecteur central précité.

2. Procédé selon la revendication 1, caractérisé en ce que la mise au point de l'optique de grandissement (9) de chaque système (6, 7) est réalisée en dehors de la zone (18) de déplacement de l'objet, pour former systématiquement une image floue de l'objet sur les barrettes (11) de photodétecteurs quelle que soit la position de l'objet par rapport à son axe théorique de défilement.

3. Procédé selon l'une des revendications précédentes, caractérisé en ce que les mesures sont réalisées de façon synchrone par les deux systèmes.

4. Procédé selon l'une des revendications précédentes, caractérisé en ce qu'on associe à chaque système une table ou une fonction de correction de mesures de diamètre apparent, qui est propre à ce système et qui prend en compte ses caractéristiques optiques et les dispersions de réalisation.

5. Dispositif de mesure au défilé du diamètre d'un objet longiligne tel qu'une fibre optique, comprenant deux systèmes opto-électroniques (6, 7) fixes de mesure dont les axes optiques (x, y) sont sensiblement coplanaires et perpendiculaires l'un à l'autre et coupent perpendiculairement l'axe théorique de défilement de l'objet, caractérisé en ce que chaque système (6, 7) comprend un objectif de grandissement (9) tel qu'un objectif de microscope formant une image floue de l'objet (1) sur une barrette (11) de photodétecteurs élémentaires, des moyens (25, 26, 27) pour repérer les photodétecteurs élémentaires sur lesquels se forment une image floue d'un bord de l'objet et pour calculer par interpolation la position exacte de ce bord, calculer le diamètre apparent de l'objet et déterminer sa position le long de l'axe optique de l'autre système, lesdits moyens (25, 26, 27) comprenant un comparateur (25) relié aux photodétecteurs pour comparer les signaux de ces photodétecteurs à un seuil prédéterminé et pour déterminer l'adresse d'un photodéteteur central situé sensiblement à mi-hauteur de l'image floue du bord de l'objet, et des moyens de calculs (27) réalisant une interpolation linéaire sur les signaux de sortie d'un nombre prédéterminé de photodétecteurs situés de part et d'autre du photodétecteur central précité.

6. Dispositif selon la revendication 5, caractérisé en ce que la mise au point de chaque objectif d'agrandissement (9) est réalisée en dehors de la zone (18) de déplacement de l'objet.

7. Dispositif selon la revendication 5 ou 6, caractérisé en ce que le comparateur (25) est un comparateur numérique monté entre un convertisseur analogiquenumérique relié aux photodétecteurs et une mémoire (26) associée à un moyen (27) de traitement de l'information.

**Patentansprüche**

1. Verfahren zum laufenden Messen des Durchmessers eines länglichen Gegenstandes, wie einer Lichtleitfaser, mittels zweier maßfester Optoelektronik-Systeme (6, 7), deren optische Achsen (x, y) annähernd koplanar und aufeinander senkrecht liegen und die theoretische Durchlaufachse des Gegenstandes (1) senkrecht schneiden, wobei das Verfahren darin besteht, daß mittels eines dieser Systeme die Verschiebung des Gegenstandes in Bezug auf seine theoretische Durchlaufachse parallel zu der optischen Achse des anderen Systemes gemessen wird und diese Messung zum Berichtigen der von diesem anderen System durchgeführten Durchmessermessung verwendet wird, dadurch gekennzeichnet, daß es darin besteht, daß in jedem System (6, 7) eine Vergrößerungsoptik (9), wie eine Mikroskopoptik, zum Abbilden eines vergrößerten, unscharfen Bildes des Gegenstandes (1) auf einer Reihe (11) elementarer Photodetektoren verwendet wird, die Photodetektoren, auf denen ein unscharfes Bild eines Randes des Gegenstandes abgebildet ist, ermittelt werden und die Signale dieser Photodetektoren zum Bestimmen der genauen Lage jedes Randes des Gegenstandes durch eine Interpolationsrechnung registriert werden, wobei die Interpolationsrechnung für jeden Rand des Gegenstandes darin besteht, daß die Signale der Photodetektoren mit einer vorbestimmten Schwelle verglichen werden, die Adresse eines zentralen Photodetektors, der annähernd auf halber Höhe des unscharfen Bildes des Randes des Gegenstandes liegt, identifiziert wird und eine lineare Interpolation an den Signalen einer vorbestimmten Anzahl von Photodetektoren durchgeführt wird, die beiderseits des zentralen Photodetektors liegen.

2. Verfahren nach Anspruch 1, dadurch gekennzeichnet, daß die Fokussierung der Vergrößerungsoptik (9) jedes Systems (6, 7) außerhalb des Verschiebungsbereiches (18) des Gegenstandes durchgeführt wird, um systematisch ein unscharfes Bild des Gegenstandes auf den Reihen (11) von Photodetektoren zu bilden, wie die Lage des Gegenstandes in Bezug auf seine theoretische Durchlaufachse auch immer sein mag.

3. Verfahren nach einem der vorhergehenden Ansprüche, dadurch gekennzeichnet, daß die Messungen durch die zwei Systeme synchron durchgeführt werden.

4. Verfahren nach einem der vorhergehenden Ansprüche, dadurch gekennzeichnet, daß mit jedem System eine Korrekturtabelle oder eine Korrekturfunktion der Messung des scheinbaren Durchmessers verbunden wird, die diesem System eigen ist und die seine optische Charakteristika und die Ausführungsstreuungen berücksichtigt.

5. Einrichtung zum laufenden Messen des Durchmessers eines länglichen Gegenstandes wie einer Lichtleitfaser, beim Durchlaufen, die zwei maßfeste Optoelektronik-Syteme (6, 7) aufweist, deren optische Achsen (x, y) annähernd koplanar und aufeinander senkrecht liegen und die theoretische Durchlaufachse des Gegenstandes senkercht schneiden, dadurch gekennzeichnet, daß jedes System (6, 7) eine Vergrößerungsoptik (9), wie ein Mikroskopobjektiv, die ein unscharfes Bild des Gegenstandes (1) auf einer Reihe (11) elementarer Photodetektoren abbildet, Mittel (25, 26, 27) zum Ermitteln der elementaren Photodetektoren, auf denen sich ein unscharfes Bild eines Randes des Gegenstandes abbildet und zum Berechnen der genauen Lage dieses Randes durch Interpolation, Berechnen des scheinbaren Durchmessers des Gegenstandes und Bestimmen seiner Lage entlang der optischen Achse des anderen Systems, aufweist, wobei die Mittel (25, 26, 27) einen Komparator (25), der mit den Photodetektoren verbunden ist, um die Signale dieser Photodetektoren mit einer vorbestimmten Schwelle zu vergleichen und um die Adresse eines zentralen Photodetektors zu bestimmen, der annähernd auf halber Höhe des unscharfen Bildes des Randes des Gegenstandes liegt und Rechenmittel (27), die eine lineare Interpolation an den Ausgangssignalen einer vorbestimmten Anzahl von Photodetektoren durchführen, die beiderseits des zentralen photodetektors liegen aufweist.

6. Einrichtung nach Anspruch 5, dadurch gekennzeichnet, daß die Fokussierung jedes Vergrößerungsobjektives (9) außerhalb des Verschiebungsbereiches (18) des Gegenstandes durchgeführt wird.

7. Einrichtung nach Anspruch 5 oder 6, dadurch gekennzeichnet, daß der Komparator (25) ein Digitalkomparator ist, der zwischen einem mit den Photodetektoren verbundenen Analog-Digital-Umsetzer und einem mit einem Informationsverarbeitungsmittel (27) verbundenen Speicher (26) angebracht ist.

**Claims**

1. A method of measuring the diameter of a running elongate object such as an optical fiber by means of two fixed measuring opto-electronic systems (6, 7) having optical axes (x, y) which are substantially coplanar and perpendicular to one another and which intersect the theoretical running axis of the object (1) perpendicularly, the method consisting in using said systems to measure the sideways displacement of the object relative to its theoretical running axis in a direction parallel to the optical axis of the other system, and in using said measurement to correct the diameter measurement performed by said other system, the method being characterized in that it consists in using magnifying optics (9) such as microscope optics in each system (6, 7) in order to form a magnified out-of-focus image of the object (1) on a strip of individual photodetectors, in identifying which photodetectors have an out-of-focus image of one of the edges of the object formed thereon, and in recording the signals from said photodetectors in order to determine the exact position of each edge of the object by an interpolation computation, the said interpolation computation consisting, for each edge of the object, in comparing the photodetector signals with a predetermined threshold, in identifying the address of a central photodetector situated substantially in the middle of the out-of-focus image of the edge of the object, and in performing linear interpolation on the signals from a predetermined number of photodetectors situated on either side of said central photodetector.

2. A method according to claim 1, characterized in that the magnifying optics (9) of each system (6, 7) is focused outside the zone (18) in which the object moves sideways so as to ensure that the image of the object formed on the strips (11) of photodetectors is always out of focus regardless of the position of the object relative to its theoretical running axis.

3. A method according to any preceding claim, characterized in that both systems perform measurements synchronously.

4. A method according to any preceding claim, characterized in that each system is associated with its own table or function for correcting the measurement of the apparent diameter, thereby taking account of its optical characteristics and of manufacturing dispersions.

5. Apparatus for measuring the diameter of a running elongate object such as an optical fiber, the apparatus comprising two fixed measuring opto-electronic systems (6, 7) whose optical axes (x, y) are substantially coplanar and perpendicular to each other and intersect the theoretical running axis of the object perpendicularly, the apparatus being characterized in that each system (6, 7) comprises a magnifying lens (9) such as a microscope lens, forming an out-of-focus image of an object (1) on a strip (11) of individual photodetectors, means (25, 26, 27) for identifying those of the individual photodetectors on which an out-of-focus image of an edge of the object is formed, for computing the exact position of said edge by interpolation, for computing the apparent diameter of the object, and for determining its position along the optical axis of the other system, the said means (25, 26, 27) comprising a comparator (25) connected to the photodetectors in order to compare the signals from the photodectors with a predetermined threshold and to determine the address of a central photodetector situated substantially in the middle of the out-of-focus image of the edge of the object, with the computing means (27) performing linear interpolation on the output signals from a predetermined number of the photodetectors situated on either side of the central photodetector.

6. Apparatus according to claim 5, characterized in that each magnifying lens (9) is focused outside the zone (18) of sideways displacement of the object.

7. Apparatus according to claim 5 or 6, characterized in that the comparator (25) is a digital ccmparator connected between an analog-to-digital converter connected to the photodetectors and a memory (26) associated with data processing means (27).

FIG. 1

## FIG.2

## FIG.3

## FIG.4

## FIG.5